# EUROPEAN PATENT SPECIFICATION

(11) **EP 0 365 972 B1**
(45) Date of publication and mention of the grant of the patent: **24.11.1993**
(21) Application number: 89119215.5
(22) Date of filing: 17.10.1989
(51) Int. Cl.: B64G 7/00

(54) **A sealed tank for simulating agravity state in the interior of said tank**
Geschlossener Tank zur Simulation des Zustands der Schwerelosigkeit im Inneren des Tanks
Réservoir fermé pour la simulation de l'état d'apesanteur à l'intérieur du réservoir

(30) Priority: 26.10.1988 JP 138628/88 U; 07.11.1988 JP 279360/88; 03.02.1989 JP 23979/89
(43) Date of publication of application: 02.05.1990
(73) Proprietor: MITSUBISHI JUKOGYO KABUSHIKI KAISHA, Tokyo 100 (JP)
(72) Inventor: Kuwata, Haruho Nagoya Aircraft Works, Nagoya Aichi Pref. (JP); Ohtsuji, Kaoru Nagoya Aircraft Works, Nagoya Aichi Pref. (JP); Suzuki, Kazumi Nagoya Aircraft Works, Nagoya Aichi Pref. (JP); Iwasawa, Yoshiaki Nagoya Aircraft Works, Nagoya Aichi Pref. (JP)
(74) Representative: Fuchs Mehler Weiss

(56) References cited:
- US-A- 3 010 219
- US-A- 4 678 438
- NTIS TECH NOTES. no. 7, July 1986, SPRINGFIELD, VA US page 811 NASA TECHBRIEF: "Self-Contained Neutral Buoyancy Suit"
- SPACEFLIGHT. vol. 11, no. 5, May 1969, LONDON GB pages 158 - 159; "ORBITING WORKSHOP UNDERWATER"

## Description

The present invention relates to a sealed tank for simulating agravity state in the interior of said tank for simultaing the agravity condition on the ground that can be used for research and development, training, leisure and the like.

US-A-4,678,438 discloses a sealed water tank filled with a buoyancy liquid and comprising a filling and draining system for the buoyancy liquid which is arranged outside of the tank and communicating with the interior. For agravity state simulations, partial vacuum is applied to the water tank. However, mainly the effect of pressure differences can be tested using this equipment. Exact agravity state simulations for space flight training purposes cannot be attained with a vacuum simulator as is explained hereinafter.

As disclosed in "SPACEFLIGHT", vol. 11, No. 5, May 1969, p. 158, 159 it is indispensable to simulate the agravity state (called also as weightlessness state) in order to carry out on the ground such activities as work procedures, data acquisition for design, crew training or the like to be done in a pressurized cabin of a space station or the like in the space.

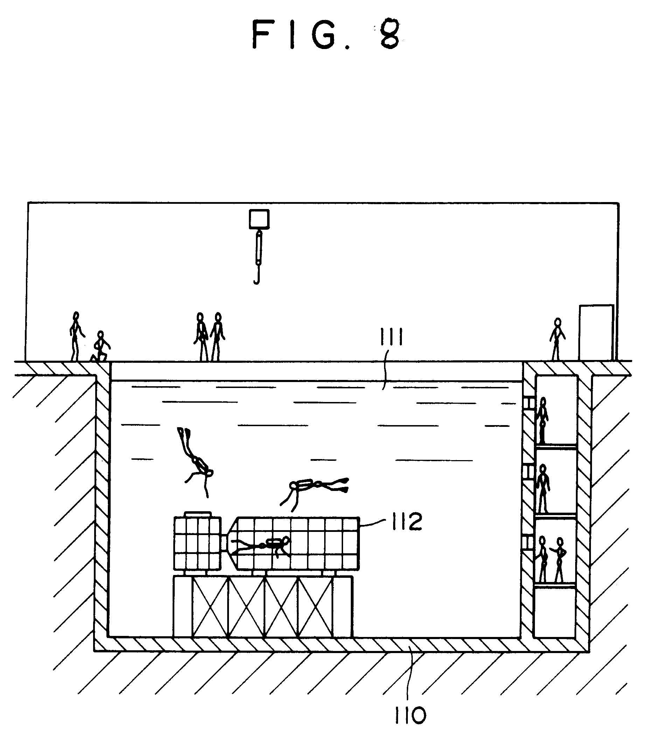

As a conventional prior art facility for simulating the agravity state of the space on the ground by utilizing the buoyancy of water, there are employed a water tank 110 and a model 112 of a pressurized cabin 112 as shown in Fig. 8 where the pressurized cabin model 112 consisting of a grid frame is immersed in water of the tank 110. Such a system has an inconvenience of requiring a large scale building, a water tank and a water feeding and draining system, and further it is not suitable for a detailed simulation of the condition within the pressurized cabin.

It is a first task of the present invention to eliminate such a drawback.

Further, the present invention relates to an agravity state simulator for generating, by simulation on the ground, the weightlessness state that is created in space flight and the like by the use of a water tank with a relatively small water depth.

As can be learned from "SPACEFLIGHT", vol. 11, No. 5, May 1969, p. 158, 159, in the past, to generate the weightlessness state on the ground use is made of a large water tank with water depth of about 10 m, and the underwater buoyancy is canceled by means of a deadweight. The reason for choosing a large water depth of about 10 m for the tank is that if the diving depth of a subject to be tested is small, the buoyancy variations become large due to large changes in the volumes of air bubbles within the diving suit and the balance of the subject tends to be easily destroyed when the water pressure around the subject changes as his diving depth varies. Namely, when the water pressure around the subject changes with the change in the diving depth as a result of the motion of the subject, the bubbles in the subject's suit (wet suit or dry suit) undergo changes in volume, resulting in the variations in the buoyancy. Because of this, even when a weight is set to balance the buoyancy and the gravity of the subject for a certain depth, it is difficult to obtain a stabilized weightlessness state due to change in the buoyancy with the change in the depth. By choosing the diving depth large in order to reduce the effect of the buoyancy change, stability can be improved as a result of relative reduction in the buoyancy change effect due to the depth change. However, there is a drawback in that it becomes necessary to use a large tank with large water depth, and hence a large facility, in order to realize what is stated in the above.

The present invention further relates to a water tank for underwater swimming with small water depth which may be applied to simulation of space walk and the like.

With the manned space activities such as those related to space stations being considered seriously as a reality, works in the weightlessness state in the space are becoming important. These activities may roughly be classified into intra vehicular activities (referred to as IVAs hereinafter) which relate to works within the spacecraft and extra vehicular activities (referred to as EVAs hereinafter) which relate to works outside of the spacecraft, but both of these activities are done in the weightlessness state.

As the methods of simulating the weightlessness state on the ground for the training of the IVA and EVA activities, there are known a drop tower, free fall from a balloon and a ballistic flight by means of a rocket or an aircraft. However, the duration of the weightlessness state in one test for all of these is a short time of 10 to 20 seconds. In order to simulate the weightlessness state on the ground for a relatively long period of time, use is made of a method which utilizes neutral buoyancy in the water. This method is effective for evaluation of equipments acquisition of design data, activity training for the astronauts and the like, and has already been put into practical use at the U.S. National Aeronautics and Space Administration (referred to as NASA hereinafter).

Underwater activities are diving activities which require various kinds of diving apparatus. However, when a diver goes into the water by wearing a diving suit, diving apparatus for breathing and the like, the diver is subjected to a buoyancy. In order to maintain a stabilized underwater condition which is free from ups and downs, it is necessary to adjust the buoyancy by attaching weights such as those made of lead to the waists, feet, hands and the like. The same argument applies also to material bodies, similar to the case of the human beings. Thus, in order to put a body with weight of 100 kg, for example, to a neutralized buoyancy condition, it is necessary to adjust the buoyancy by using a material such as foaming styrene (material with small specific gravity) that has a buoyancy of 100 kg.

With a preparation as in the above, simulation of IVAs and EVAs of space walk can be realized by carrying out various kinds of operations and handlings in the water tank, between the astronaut in the form of a diver and material bodies whose buoyancies are adjusted.

The conventional water tanks for weightlessness simulation in actual use at NASA and the like are of various kinds, such as of nonelevated type and of ground embedded type, with a water depth in the range of 8 to 12 m. The reason for this is that when the water depth is small in the case of a water tank type facility, the changes in the volume of the diving suit due to changes in the pressure inside the suit created by the vertical motion of the diver are relatively large compared with the case of a large water depth, which causes instability of the motion and gives undesirable effects on the simulation of the weightlessness state. This means accordingly that it is desirable to have larger water depth from the viewpoint of the stability of the operation. However, with an increase in the water depth, there arise safety problems such as the caisson disease so that the depth in the range of 8 to 12 m for which the physiological influence is relatively mild is generally employed.

Since the water depth of around 10 m is adopted in the case of a conventional water tank, the weight of the facility filled with water becomes very large which requires a high strength for the foundation such as the ground so that the construction cost runs up high. In addition, a large scale water tank and various other facilities are also required. Further, it consumes a large amount of water and costs a large sum of money for maintenance and management. Moreover, there is such a problem as it requires a long time for preparation and water depth control.

What has been mentioned in the above represents a second task the present invention is intended to accomplish.

### 3. OBJECT AND SUMMARY OF THE INVENTION:

(1) The present invention was motivated by the first task mentioned above, and it is an object of the present invention to provide a sealed tank especially for simulating agravity state with low construction and operating costs which requires neither a large-sized water tank nor auxiliary facilities and equipments, but enables to create with high accuracy simulated conditions of the moving space, the temperature in the living quarters and the like, in the space, and permits to install an external instrumentation system which is safe and easy to maintain. Further, the simulator uses a small quantity of liquid which makes it safe in the case of an emergency by allowing a fast draining, contributing to enable effective, adequate and accurate simulation tests to be made.
   According to claim 1 a main point of the present invention is a sealed tank especially for simulating agravity state, the sealed tank being filled with a buoyancy liquid and further comprising a liquid filling/draining system arranged outside of the sealed tank that is communicated with the interior of the sealed tank, characterized in that the buoyancy liquid is subjected to a pressure substantially higher than atmospheric pressure, a plurality of observation windows is provided on the peripheral wall of the sealed tank and an instrumentation and observation system is provided in conjunction with the observation windows.
(2) The present invention was done to accomplish the second task mentioned above, and it is an object of the present invention to provide a sealed water tank which enables to obtain a stabilized buoyancy even when the water depth is small
   Another main point of the present invention is a sealed tank especially for simulating agravity state which is equipped with a hatch and a pressure source connected to the water tank for supplying compressed air, water or the like.
   In the above, after the hatch is closed and hermetically sealed, the sealed water tank is supplied with compressed air, water or the like from the pressure source, and the interior of the tank is pressurized. With this arrangement, the interior of the sealed water tank is pressurized so that it is possible to realize a condition in which the changes in the buoyancy are small as in the case of large depth of water even when the depth of water in the water tank is small. In other words, the agravity state can readily be realized with a compact water tank.
   Still another main object of the present invention is a sealed water tank especially for simulating agravity state as well as for underwater swimming equipped with a water pressure tower arranged at the upper surface part of the water tank, where the interior of the tower is communicated with the water tank.
   In accordance with the present invention, due to the provision of the water pressure tower with its interior communicated with the water tank arranged at the upper surface part of the water tank, it is possible to secure an equivalent water depth using a tank with smaller amount of water than the conventional tank. Therefore, it is possible to realize a water tank for underwater swimming with smaller amount of water to be used, compact equipments with less construction cost, less time for filling water, easier control of water depth and less maintenance cost.
   In a preferred embodiment the tank is built as a model of pressurized space cabin that has an appropriate shape and area necessary for testing by simulation of the manned environment space, provided in its interior with apparatus models and a model of the control panel for the apparatus for performing the functions of the pressurized space cabin. In accordance with the present invention with the above constructions, it is possible to carry out high fidelity simulation tests and personnel training by arranging a high performance instrumention and observation system since the activity conditions of the tested personnel inside can be measured or observed by means of an appropriate instrumentation and observation system through the observation window on the peripheral wall of the pressurized space cabin model. Further, there is not required a large sized water tank and the like since the buoyancy liquid fills only the interior of the pressurized space cabin model. Moreover, the concentration of the buoyancy liquid can readily be adjusted so that the functional range of the simulation tests can be expanded and improved.

### 4. BRIEF DESCRIPTION OF THE DRAWINGS:

FIG. 1 is a vertical sectional view showing the pressurized space agravity state simulator which is Embodiment 1 of the present invention.

FIG. 2 is a horizontal sectional view of the Embodiment 1.

FIG. 3 is a perspective view showing the circumstances of personnel training done by using the Embodiment 1, the pressurized space agravity state simulator in accordance with the present invention.

FIG. 4 is a conceptual diagram of another agravity state simulator which is Embodiment 2 in accordance with the present invention.

FIG. 5 is a conceptual perspective view for explaining the water tank for underwater swimming which is Embodiment 3 in accordance with the present invention.

FIG. 6 is a conceptual perspective view for explaining the circumstances in which a spacecraft is joined to the water tank for underwater swimming which is the Embodiment 3.

FIG. 7 is a conceptual diagram for comparing the Embodiment 3 and the conventional water tank for underwater swimming.

FIG. 8 is a vertical sectional diagram of the conventional prior art space agravity state simulator.

### 5. DETAILED DESCRIPTION OF PREFERRED EMBODIMENTS:

Referring to the preferred embodiments shown in the accompanying drawings, the present invention will be described further in detail in the following.

It should be noted, however, that the present invention will by no means limited to the embodiments that will be described below. Alterations, additions and modifications within the scope described in the claims should all be considered to be included in the present invention.

### Embodiment 1

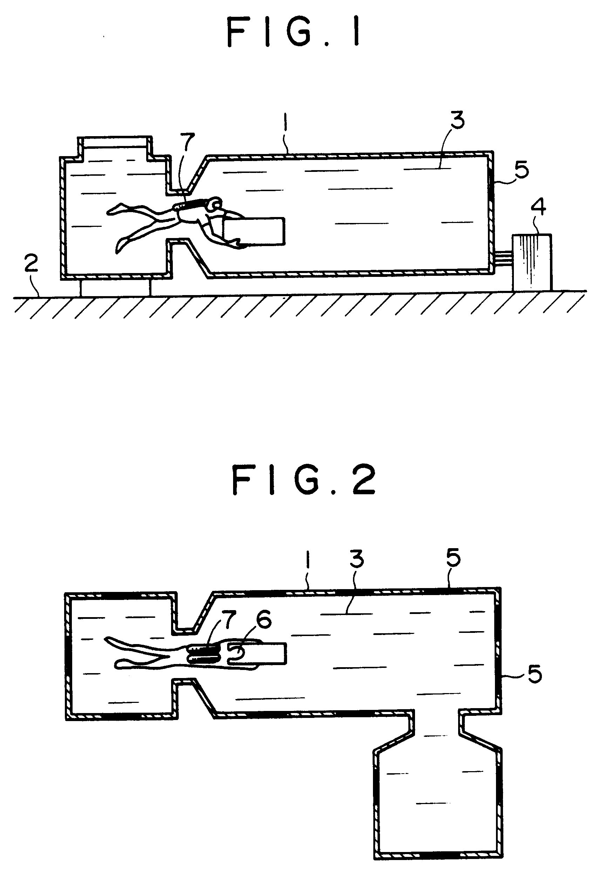

The Embodiment 1 relates among various embodiments of the present invention to the pressurized space agravity state simulator done for the first task mentioned in the above. The Embodiment 1 will be described by making reference to FIG. 1, FIG. 2 and FIG. 3.

In the drawings, 1 is a pressurized space cabin model having appropriate shape and area necessary for simulating by testing the activities within a manned environmental region in the space, which is installed fixed on the ground. The interior of the pressurized space cabin model 1 is filled with water or buoyancy liquid containing an appropriate solvent or solute (such as NaCl, etc.) through a liquid filling/draining system 4 disposed outside of the model 1 and communicated with the interior of the model 1. At the time of filling the liquid 3, it may be pressurized. The buoyancy liquid 3 is used for giving a buoyancy and simulating the agravity state for the test personnel who work inside the pressurized space cabin model 1, and for simulating the temperature within the pressurized space cabin model 1 by giving a necessary temperature adjustment.

Further, the pressurized space cabin model 1 is provided with a plurality of transparent observation windows 5, in addition to the model 8 of the various kinds of apparatus and a model 9 of the control panel that are found in an actual unit of a space station. At the observation windows 5 there is arranged an instrumentation and observation system consisting of a still camera, an underwater camera, a video camera, a voice channel and the like, by means of which communication with the personnel 6 inside the model 1 as well as observation and recording of the work activities inside are carried out. Reference numeral 10 is an internal wall.

The test personnel 6 who carry out works inside the pressurized space cabin model 1 are equipped with a breathing system 7 which is portable or connected to the outside, in order to maintain breathing in the liquid.

Thus, in such a facility only the interior of the pressurized space cabin model 1 is filled with the buoyancy liquid 3 so that it is possible to simulate the conditions of the living quarters in the space with high accuracy. Further, the activity conditions of the test personnel 6 inside the model can be measured or observed with an appropriate measuring and observation system from the outside of the observation windows provided on the peripheral wall of the pressurized space cabin model 1, so that a high fidelity simulation test can be carried out by arranging a high performance measuring and observation system. Moreover, the buoyancy liquid 3 needs to fill the interior of the pressurized space cabin model 1 alone directly with the liquid filling/draining system 4 in the outside, so that there is no need for providing a large-scale water tank and the accessory facilities as is done for the conventional case. Still further, the quantity of the buoyancy liquid 3 is small compared with the conventional facility so that the concentration of the liquid can readily be varied by adjusting the amount of the solvent, and the like, and the functional range of the simulation tests, the training of the personnel, and the like can further be expanded.

In accordance with the Embodiment 1, it is possible to obtain a pressurized space agravity state simulator low in construction and operation costs which does not require a large-scale water tank or accessory facilities and equipments, permits to create with high accuracy simulated states of the temperature in the living quarters, movement space, and the like in the space, enables to install an instrumentation system which is safe and easy maintainability on the outside of the facility, further, is safe at the time of an emergency by the use of smaller quantity of the liquid which permits fast draining, and enables to carry out simulation tests that are effective, adequate and accurate.

### Embodiment 2

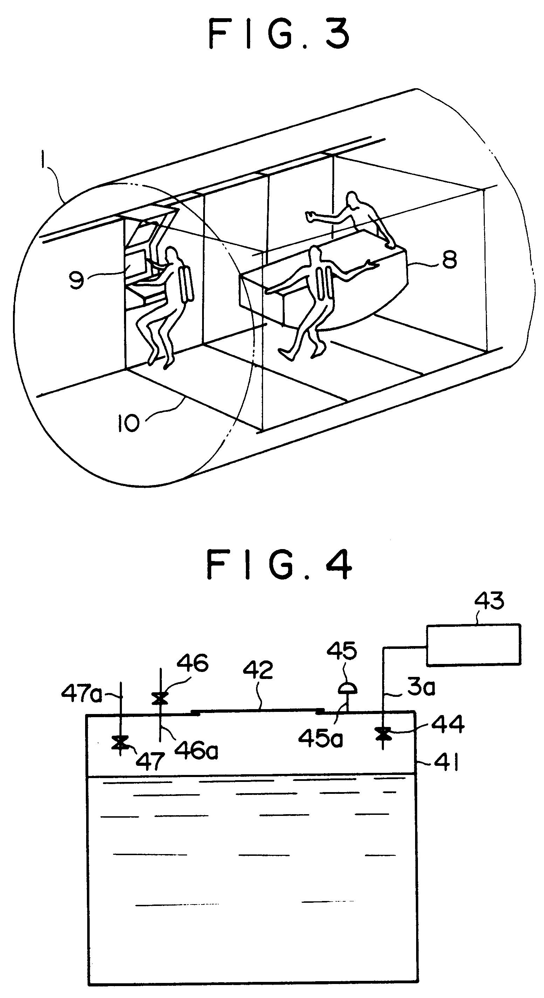

The Embodiment 2 relates to an agravity state simulator considered as a solution to the second task of the present invention. The Embodiment 2 will be described by referring to FIG. 4.

The Embodiment 2 shown in FIG. 4 is equipped with a sealed water tank 41 provided with a hatch 42 in the upper part, a pressurizing source 43 and a hand valve 44 that are connected to a pipe 43a that penetrates the upper part of the water tank 41 in the exterior and the interior, respectively, of the water tank 41, a relief valve 45 that is connected to a pipe 45a that penetrates the upper part of the water tank 41 in the interior of the water tank 41, and vent valves 46 and 47 that are connected to a pipe 46a in the exterior and a pipe 47a in the interior, respectively, of the water tank 41.

In accordance with the Embodiment 2, the interior of the sealed water tank can be pressurized by the provision of a pressurizing source that supplies compressed air, water or the like to the sealed water tank. Therefore, even when the water depth of the tank is small, it becomes possible to create a condition in which the variation of buoyancy with the water depth is small, as in the case of large water depth. Because of this, it becomes possible to readily realize the agravity state using a compact water tank.

### Embodiment 3

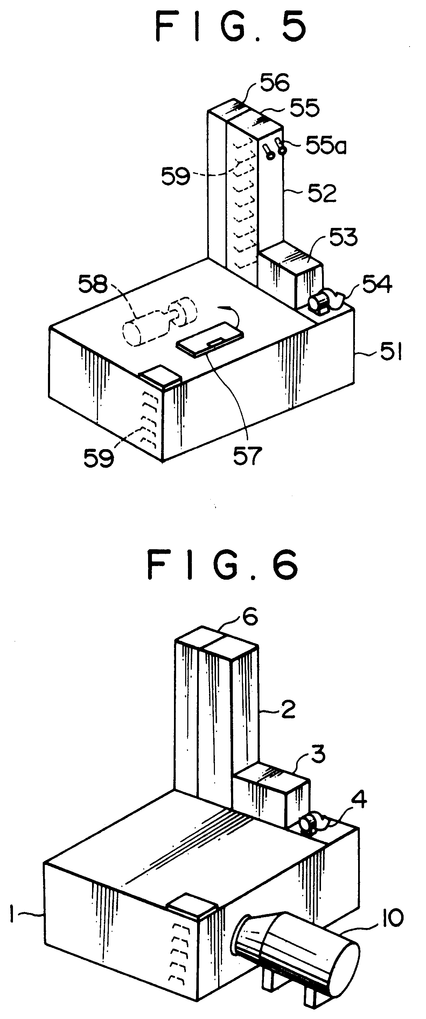

The Embodiment 3 relates to the water tank for underwater swimming to solve the problem raised in conjunction with the second task of the present invention. The present embodiment will be described by referring to FIG. 5 and FIG. 6.

The Embodiment 3 shown in FIG. 5 is provided with a water tank 51 with water depth of about 3 m that has a sealing type cover 57 on its top surface, a water pressure tower 52 with height of about 7 m provided on the top surface of the water tank 51 with its interior communicated with the water tank 51, and having a ladder 59 provided on its inner wall and an entrance 55 and a feed water port 55a at its upper part, an elevator 56 provided alongside the water pressure tower 52, and a reserve tank 53 and a feed water pump 54 provided on the top surface of the water tank 51.

With the above arrangement, water is supplied by the feed water pump 54 via the feed water port 55a to fill the water tank 51 and the water pressure tower 52. Then, an astronaut and the like who practice works or the like within the water tank 51 climb up the ladder 56 to the top of the water pressure tower 52, enters into the water pressure tower 52 through the entrance 55, climbs down the ladder 59 to dive into the water at a gentle speed of less than 10 m/min, and goes into the water tank 51.

The feeding of water to the water tank 51 and the water pressure tower 52 is done by first opening the sealing type cover 57 to fill the water tank with water supplied through the opening, then closing the sealing type cover 57. Next, the water pressure tower 52 may be filled with water by supplying water from the feed water port 55a by controlling the flow rate of the feed water pump 54 while permitting to vent the air.

The top surface of the water tank 51 is given an upward slope toward the base of the water pressure tower 52 to make it easier for the exhaust gas that may be generated during the diving operation to be bypassed to the water pressure tower 52. The top surface of the tank is used also as the storage for a model 58 used for the training in the weightlessness state. Moreover, the reserve tank 53 is used when there is a need for temporarily retaining the feeding or draining water.

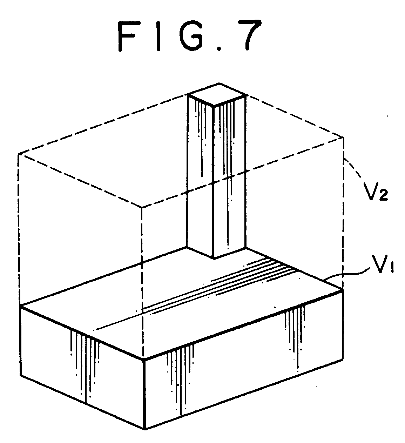

With the arrangement described in the above, for a capacity V₁ of the water tank of the present invention which is about 1/3 of the capacity of the conventional water tank, there can be secured equal water depth, as shown in FIG. 7. Therefore, it is possible to realize a water tank for underwater swimming which uses smaller quantity of water, requires lower construction cost due to compactness of the facility, takes shorter time for filling water, is easier for controlling the water depth, and requires lower maintenance cost.

When the water tank in the above is to be used for training activities within the spacecraft, it is recommended to give it the same order of capacity as the interior of the spacecraft or to attach a model of the spacecraft to its sidewall as shown in FIG. 6.

Moreover, the water tank may be provided with a purifying facility to keep the water inside at a satisfactory quality level, made by using a transparent material or provided with observation windows so as to permit the observation, from outside, of the training conditions inside the tank, or supplied with a hose having a regulator so as to enable constant supply of clean air from a compressor. Further, the water pressure tower may be given a different shape such as cylindrical shape.

In accordance with the Embodiment 3, by the provision of a water pressure tower which is arranged in the upper surface part of the water tank, with its interior communicated with the water tank, same water depth can be secured with smaller volume compared with that of the conventional water tank. Therefore, it is possible to realize a water tank for underwater swimming which uses smaller quantity of water, requires lower construction cost for compact facility, takes less time for filling water, easier to control the water depth, and needs lower maintenance cost.

Moreover, the present invention may be applied to a leisure equipment or the like which employs an artificial gravity due to rotation under an agravity state, in addition to the application to the experimental facilities.

## Claims

1. A sealed tank (1, 41, 51) for simulating agravity state in the interior of said tank (1, 41, 51) and comprising a buoyancy liquid (3) filling said interior and a liquid filling and draining system (4) arranged on the outside of said tank (1, 41, 51) and in communication with said interior, characterized in that:
- the buoyancy liquid is subjected to a pressure substantially higher than atmospheric pressure;
- a plurality of observation windows (5) are provided on the peripheral wall of said tank (1, 41, 51); and
- an instrumentation and observation system is provided in conjunction with the observation windows (5).

2. A sealed tank according to claim 1,
characterized in that:
- the sealed tank (41) has a hatch (42); and that
- the liquid filling and draining system has a pressurized source (43) connected to the tank (41) for supplying compressed air, water or the like.

3. A sealed tank according to claim 1,
characterized in that:
- a water pressure tower (52) is disposed on part of the top surface of the sealed water tank (51) with its interior communicated with the tank (51).

4. A sealed tank according to one of claims 1 to 3, characterized in that the sealed tank (1) is built as pressurized space cabin model (1) with a shape and area that is appropriate for carrying out simulation tests in a manned environmental space and having in its interior a model of equipments (8, 9) for carrying out the functions of the pressuried space cabin (1) and a model of a control panel (9) of the equipments.

## Patentansprüche

1. Geschlossener Tank (1, 41, 51) zur Simulation des Zustands der Schwerelosigkeit im Innern des Tanks (1, 41, 51) mit einer das Innere ausfüllenden Schwimmflüssigkeit (3) und einem an der Außenseite des Tanks (1, 41, 51) angebrachten und mit dem Innern in Verbindung stehenden System (4) zum Füllen und Entleeren der Flüssigkeit, dadurch gekennzeichnet, daß:
- die Schwimmflüssigkeit mit einem wesentlich höheren Druck als Atmosphärendruck beaufschlagt ist;
- eine Anzahl von Sichtfenstern (5) an der Außenwand des Tanks (1, 41, 51) vorgesehen sind; und
- ein mit den Sichtfenstern (5) in Verbindung stehendes System zur Ausstattung mit Instrumenten und zur Beobachtung vorgesehen ist.

2. Geschlossener Tank nach Anspruch 1, dadurch gekennzeichnet, daß:
- der geschlossene Tank (41) eine Luke (42) aufweist; und
- das System zum Einfüllen und Entleeren der Flüssigkeit eine Druckquelle (43) aufweist, welche zur Einspeisung von komprimierter Luft, Wasser oder ähnlichem mit dem Tank (41) verbunden ist.

3. Geschlossener Tank nach Anspruch 1, dadurch gekennzeichnet, daß:
- an der Oberseite des geschlossenen Tanks (51) ein Wasserdruckturm (52) angeordnet ist, welcher mit seinem Innenraum mit dem Tank (51) verbunden ist.

4. Geschlossener Tank nach einem der Ansprüche 1 bis 3, dadurch gekennzeichnet, daß der geschlossene Tank in Form einer Raum-Druckkapsel (1) ausgebildet ist, mit einer Form und Fläche, welche zur Ausführung von Simulationstests in einem bemannten Klimaraum geeignet ist und daß er im Innern ein Muster für Ausrüstungsgegenstände (8, 9), um die Funktionen der Raum-Druckkapsel auszuführen (1) und ein Muster für ein Bedienungspult (9) für die Ausrüstungsgegenstände, aufweist.

## Revendications

1. Réservoir hermétique (1, 41, 51) pour simuler un état d'apesanteur à l'intérieur dudit réservoir (1, 41, 51) et comprenant un liquide portant (3) remplissant ledit intérieur et un système de remplissage et de drainage de liquide (4) placé à l'extérieur dudit réservoir (1, 41, 51) et pouvant communiquer à l'intérieur, caractérisé en ce que :
- le liquide portant est soumis à une pression essentiellement supérieure à la pression atmosphérique,
- plusieurs fenêtres d'observation (5) sont fournies sur la paroi périphérique dudit réservoir (1, 41, 51) et
- un équipement d'instruments et un système d'observation sont fournis avec les fenêtres d'observation (5).

2. réservoir hermétique selon la revendication 1, caractérisé en ce que :
- le réservoir hermétique (41) présente une trappe d'accès (42) et en ce que
- le système de remplissage et de drainage du liquide présente une source pressurisée (43) reliée au réservoir (41) afin de fournir de l'air comprimé, de l'eau ou analogues.

3. Réservoir hermétique selon la revendication 1, caractérisé en ce que :
- une tour de pression d'eau (52) est installée sur une partie de la surface supérieure du réservoir d'eau hermétique (51) et dont l'intérieur communique avec le réservoir (51).

4. Réservoir hermétique selon l'une des revendications 1 à 3, caractérisé en ce que le réservoir hermétique (1) est construit comme un modèle de cabine spatiale pressurisée (1), avec une forme et une surface appropriées, pour effectuer des tests de simulation dans un environnement spatial humain et présentant, à l'intérieur un modèle d'équipements (8, 9) destinés à effectuer les fonctions d'une cabine spatiale pressurisée (1) et un modèle de pupître de commande (9) des équipements.
